# EUROPEAN PATENT APPLICATION

(11) **EP 0 585 474 A1**
(43) Date of publication of application: **09.03.1994**
(21) Application number: 93906803.7
(22) Date of filing: 22.03.1993
(51) Int. Cl.: B62M 25/04

(54) **GEAR SHIFTER FOR BICYCLE**

(30) Priority: 23.03.1992 JP 64826/92
(71) Applicant: MAEDA INDUSTRIES, LTD., Osaka-fu 587 (JP)
(72) Inventor: TAGAWA, Koichi, Maeda Industries, Ltd., Minamikawachi-gun, Osaka-fu 587 (JP)
(74) Representative: Cross, Rupert Edward Blount
(86) International application number: JP9300336
(87) International publication number: WO9318961

(57) **Abstract**

A gear shifter for bicycles is provided in which the functions of a means for locking a shifter body in a predetermined pivotal position is not affected even when the shifter body, which is supported so that it can be turned around the axis of a handlebar, is bent. The gear shifter (6b) includes a shifter body (14) supported so that it can be turned around the axis of a handle bar (3); and a locking means (15) adapted to lock the shifter body in a predetermined pivotal position. The shifter body is operated by an operating cable adapted to be rewound or payed out in accordance with a pivotal movement of the shifter body, the locking means (15) being provided with a locking body (33) engaged with the shifter body, turned therewith and locking the same in a predetermined pivotal position.

## Description

### [Field of the Invention]

The present invention relates to a bicycle speed change operation assembly which prevents hinderance to the function of a retainer mechanism even if a speed change operation member is distorted under a rotational speed changing operation force.

### [Background Art]

A speed change operation assembly for a sports type bicycle such as racing bicyle or the like is most commonly mounted on a bicycle frame such as top tube, downtube or the like. Therefore, the hand must be removed from the handlebar at the time of performing a speed change, making it impossible to apply brake quickly and necessitating one-hand steering of the bicycle. As a result, the steering becomes unstable, failing to provide a high safety.

A speed change operation is required usually when the road condition change, for instance, from flat to slope or vice versa. In such a case, the running condition tends to become unstable with greater need for braking.

In order to solve this problem, Japanese Utility Model Laid-Open No. 58-46693 proposes a so-called rotary-grip type speed change operation assembly which comprises a cylindrical operation member fitted around a handlebar. The cylindrical operation member is rotationally operated to pull or pay out a speed control cable.

The speed change operation assembly described above makes it possible to perform a speed change operation without removing the hand from the handlebar. Therefore, the running safety can be greatly improved.

With the prior art rotary-grip type speed change operation assembly, the outer circumference of the cylindrical operation member is formed integrally with a reel portion for winding the speed control cable. Further, the cylindrical operation member also has an axially inner end formed with a retainer mechanism for retaining the operation member at predetermined rotational positions.

The retainer mechanism may be, for example, of the frictional type which utilizes friction for steplessly retaining the cylindrical operation member at any rotational position or of the click type which retains the operation member stepwise at predetermined positions. The cylindrical operation member has an inner end face or an inner end portion which is integrally formed with a friction surface for generating a frictional force or click grooves for constituting the click mechanism.

However, the rider has the tendency to grip the cylindrical operation member with a large force at the time of rotationally operating it. Thus, the cylindrical operation member is likely to be deformed, thereby distorting the friction surface or the click grooves at the inner end face or inner end portion of the operation member. As a result, the retainer mechanism does not operate fully, which leads to a problem that the cylindrical operation member cannot be held at predetermined rotational positions.

In addition, the cylindrical operation member must be supported around the handlebar grip portion so that it can be smoothly operated for rotation. For this purpose, there is a need for providing a slight clearance between the inner circumference of the cylindrical operation member and the outer circumference of the grip portion rotatably supporting the operation member. Therefore, it is difficult to prevent distortion at the inner end of the cylindrical operation member.

### [Disclosure of the Invention]

It is, therefore, an object of the present invention to provide a bicycle speed change operation assembly which prevents hinderance to the function of a retainer mechanism for holding a speed change operation member at predetermined rotational positions even if the speed change operation member supported to rotate about the axis of the handlebar is distorted.

The present invention provides a bicycle speed change operation assembly comprising: a speed change operation member rotatably supported around a handlebar; a retainer mechanism for holding the operation member at predetermined rotational positions; the operation member being rotationally operated for pulling or paying out a control cable which is connected to a shifing mechanism; wherein the retainer mechanism includes a retainer body rotatably fitted around the handlebar and engaging an end portion of the speed change operation member for integral rotation therewith.

Other objects, features and advantages of the present invention will be apparent from the following description of the preferred embodiments given with reference to the accompanying drawings.

### [Brief Description of the Drawings]

Fig. 1 is a view showing an overall arrangement of a bicycle speed change system which employs speed change operation assemblies according to the present invention.

Fig. 2 is a plan view showing a speed change operation assembly according to the present invention.

Fig. 3 is an axial sectional view of the speed change operation assembly shown in Fig. 2.

Fig. 4 is a sectional view taken on lines IV-IV in Fig. 3.

Fig. 5 is a view, partially in section, showing a principal portion of the speed change operation assembly according to the present invention.

Fig. 6 is a view showing how the present invention works.

Fig. 7 is a sectional view taken along lines VII-VII in Fig. 4.

Fig. 8 is a view illustrating the operation of a click mechanism.

Fig. 9 is a sectional view taken on lines XI-XI in Fig. 7.

### [Best Mode for Carrying Out the Invention]

Preferred embodiments according to the present invention will specifically be described with reference to the drawings.

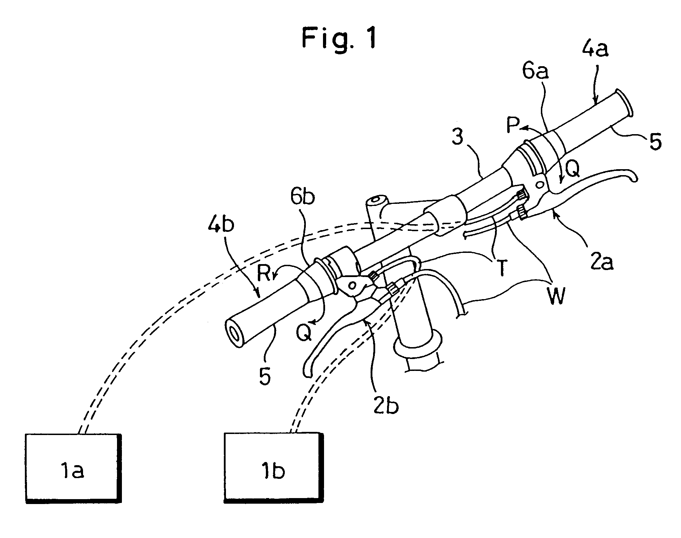

In a bicycle provided with a front shifting mechanism 1a and a rear shifting mechanism 1b, each of speed change operation assemblies 6a, 6b according to the present invention is disposed between a left or right brake lever assembly 2a, 2b and a left or right grip portion 4a, 4b of a handlebar 3, as shown in Fig. 1. The following description will be made with respect to the right speed change operation assembly 6b for controlling the rear shifting mechanism 1b. The left speed change operation assembly 6a for controlling the front shifting mechanism 1a may be similarly configured.

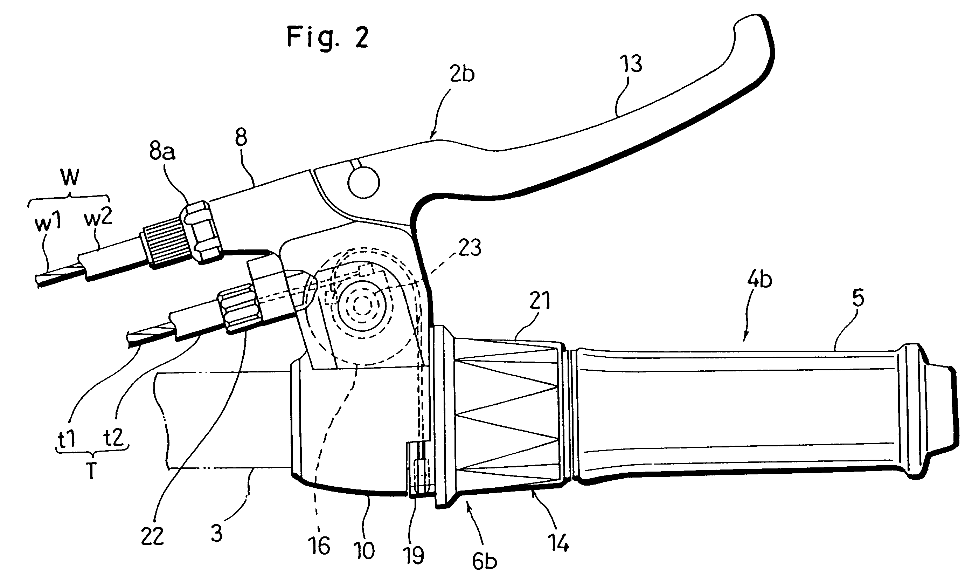

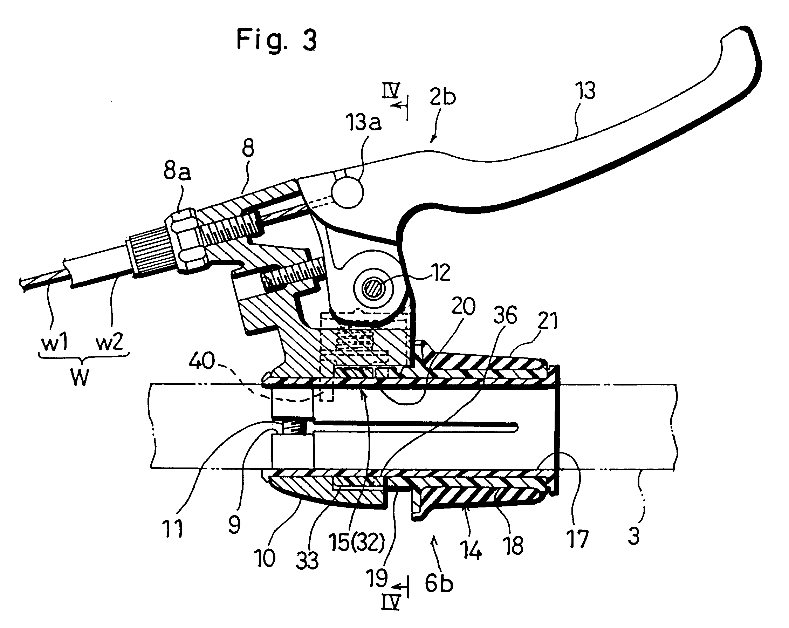

As shown in Figs. 2 and 3, the brake lever assembly 2b according to the present embodiment comprises a brake bracket 8 projecting forward from the front side of the handlebar 3, and a brake lever 13 pivotally connected at its base end to a lever shaft 12 on the brake bracket 8 and extending ahead of the grip portion 4. A brake cable W comprising an inner wire w1 and an outer sheath w2 has its outer sheath w2 connected to a sheath catcher bolt 8a which is screwed to a laterally inner end portion of the brake bracket 8. The inner wire w1 is introduced into an interior space of the brake bracket 8 and has an end nipple 13a connected to a base end portion of the brake lever 13.

Around the handlebar 3 which supports the brake lever assembly 2 and the speed change operation assembly 6b, there is provided a cylindrical resin sleeve 17 for rotatably supporting a cylindrical operation member 14 which will be described hereinafter. The brake bracket 8 has a base end provided with a cylindrical mounting portion 10 which is formed, through its circumferential wall, with a slit 9. The cylindrical mounting portion 10 is fitted around the resin sleeve 17, and a mounting screw 11 traversing the slit 9 causes forcible diametrical contraction of the cylindrical mounting portion 10, thereby fixing the brake bracket 8 together with the resin sleeve 17 relative to the handlebar 3.

As shown in Figs. 2 and 3, the speed change operation assembly 6b according to the present embodiment is integrated with the brake lever assembly 2b, and extends from the brake bracket 8 to the grip portion 4b.

The speed change operation assembly 6b according to the present embodiment includes a cylindrical operation member 14 rotatably fitted around the right grip portion 4b of the handlebar 3 to adjoin a handle grip 5 fixed to an end of the handlebar 3. The speed change operation assembly further comprises a retainer mechanism 15 provided at the inner circumference of the mounting portion 10 of the brake bracket 8 axially inwardly from the cylindrical operation member 14, and a winding reel 16 rotatably mounted on a support shaft 23 provided on the upper surface of the brake bracket 8 at a base end portion thereof.

The cylindrical operation member 14 includes a control grip portion 18 rotatably supported around the cylindrical sleeve 17 which is fitted on the handlebar 3, so that the rider can grip and turn the control grip portion. The operation member further includes a drive reel portion 19 formed integrally with the control grip portion 18 at the laterally inner side thereof for pulling or paying out a drive cable K relative to the winding reel 16, and a connecting portion 20 connected to the retainer mechanism 15 for actuation thereof.

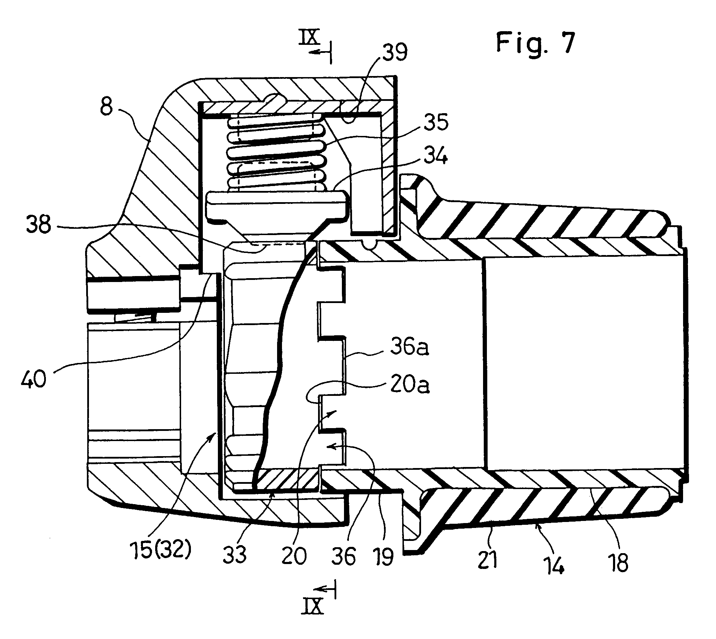

As shown in Fig. 7, the connecting portion 20 comprises engaging teeth 20a formed at the inner end of the cylindrical operation member 14. This connecting portion 20 non-rotatably engages a connecting portion 36 of the retainer mechanism 15 for actutating the retainer mechanism 15.

The outer circumference of the control grip portion 18 is provided with a rubber coating 21 for the rider to grip conveniently. The coating provides subsutantial continuity with the handle grip 5.

A speed change operation may be performed while the cylindrical operation member 14 or the handle grip 5 is grasped for steering.

Fig. 2 is a plan view of the speed change operation assembly 6b according to the present embodiment. Fig. 3 is a sectional view along the axis of the speed change operation assembly 6b.

According to the present embodiment, a speed control cable T includes an inner wire t1 and an outer sheath t2 enclosing the inner wire. The outer sheath t2 of the control cable T is fastened to a sheath catcher bolt 22 screwed to a base end portion of the brake bracket 8. The inner wire t1 is wound around the winding reel 16 provided on top of the brake bracket 8.

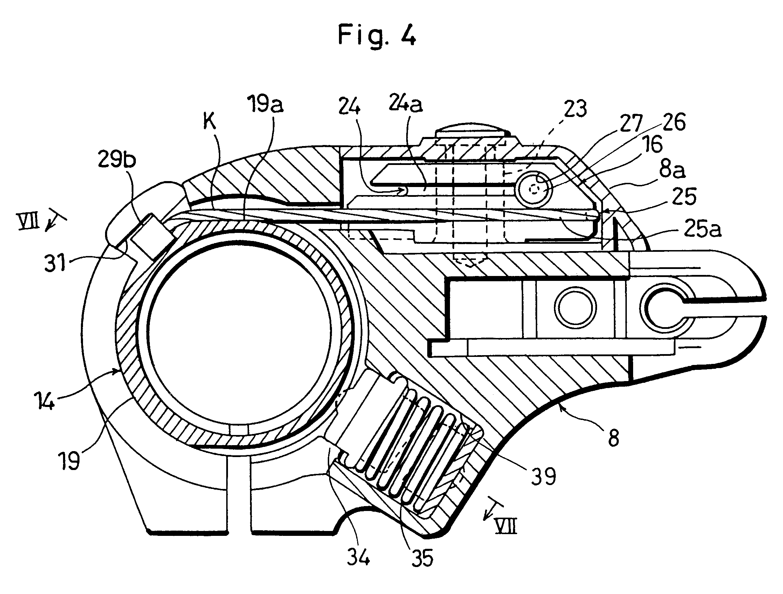

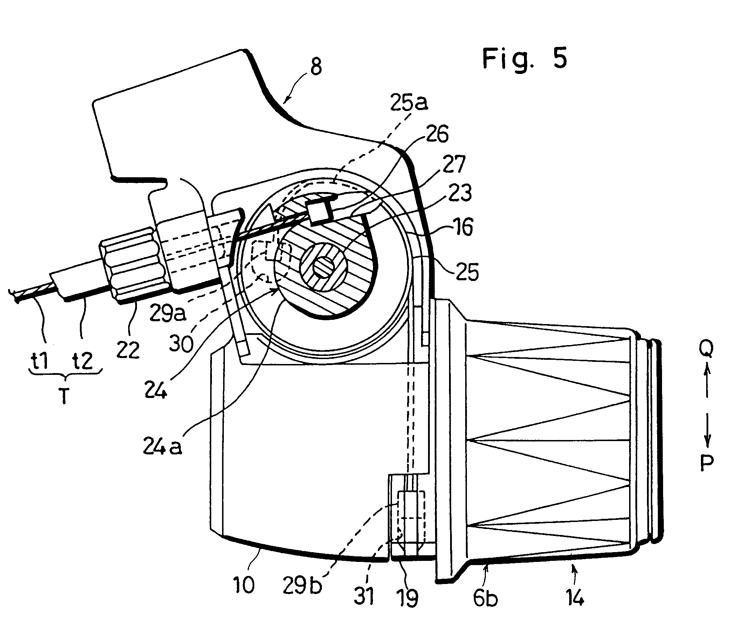

As shown in Figs. 4 and 5, the winding reel 16 has a general shape of a cone frustum and is rotatably supported on the support shaft 23 on top of the brake bracket 8. Indicated by reference sign 8a in Fig. 4 is a cover for covering the winding reel.

The winding reel 16 has its outer periphery provided with a first reel portion 24 for winding the inner wire t1 of the speed control cable T, and with a second reel portion 25 for winding the drive cable K extending from the drive reel portion 19.

The first reel portion 24, which is disposed at a diametrically smaller portion of the winding reel 16, comprises a winding groove 24a in form of a circumferential cut formed in the taper surface of the cone frustum, and a nipple engaging hole 27 extending tangentially to the winding groove 24a in continuity therewith. The speed control wire t1 is wound in the winding groove 24a and has an end nipple 26 fastened to the nipple engaging hole 27.

On the other hand, the second reel portion 25 is disposed at a diametrically larger portion of the winding reel 16 close to the top of the brake bracket 8 and comprises a winding groove 25a extending generally along the largest diameter circumference of the winding reel 16. The winding groove 25a has a terminal portion bent radially inward, and a nipple engaging hole 30 is formed in continuity with the terminal terminal portion of the winding groove 25a.

The drive cable K, which is wound in the winding groove 25a of the second reel portion 25, has an end nipple 29a engaging in the nipple engaging hole 30. In this way, one end of the drive cable K is connected to the winding reel 16.

The speed control cable T is arranged to extend along the handlebar 3 and has its inner wire t1 extending beyond the catcher bolt 22 generally in parallel to the handlebar for winding on the first reel portion 24. On the other hand, the drive cable K extends from the drive reel portion 19 of the operation member 14 perpendicularly to the handlebar 3 for winding on the second reel portion 25 of the winding reel 16.

The speed control cable T and the drive cable K are arranged so as to be pulled and paid out generally perpendicularly to each other. Thus, by pulling the drive cable K circumferentially onto the cylindrical operation member 14 on the handlebar 3, it is possible to pull the inner wire t1 of the speed control cable T in a direction along the handlebar 3.

The drive cable K wound on the second reel portion 25 has another end nipple 29b received in a nipple engaging hole 31 which is formed along a winding groove 19a of the drive reel portion 19 of the cylindrical operation member 14. In this way, the other end of the drive cable K is fastened to the cylindrical operation member 14.

According to the present embodiment, as shown in Figs. 4 and 5, when the cylindrical operation member 14 is rotationally operated to move its top surface rearward (in the direction of arrow P), the drive cable K is pulled by being wound onto the drive reel portion 19 of the cylindrical operation member. As a result, the winding reel 16 is rotated clockwise in Fig. 5, and such rotation of the winding reel 16 causes the inner wire t1 of the speed control cable T to be pulled.

On the other hand, when the cylindrical operation member 14 is rotationally operated to move its top surface forward (in the direction of arrow Q), the drive cable K is paid out from the drive reel portion 19. As a result, the winding reel 16 is rotated counterclockwise under the tension applied to the inner wire t1 by an unillustrated return spring of the shifting mechanism, thereby allowing the inner wire t1 to be paid out from the first reel portion 24.

Such pulling or paying out of the inner wire t1 results in relative axial movement between the inner wire t1 and the outer sheath t2 of the speed control cable. The rear shifting mechanism is thereby actuated.

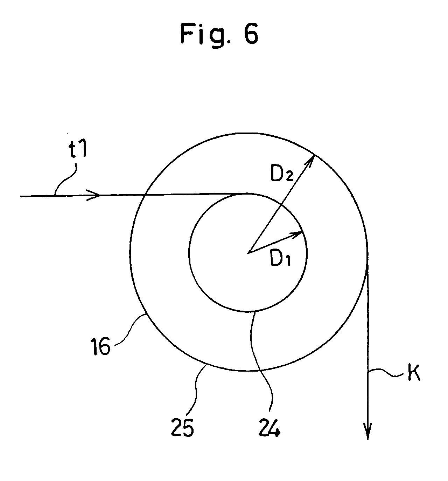

According to the present embodiment, the winding reel 16 is provided with the first reel portion 24 for winding the inner wire t1 as well as with the second reel portion 25 for winding the drive cable K, as previously described. Further, the winding radius D₁ of the first reel portion 24 is set smaller than the winding radius D₂ of the second reel 25, as schematically illustrated in Fig. 6.

Therefore, the pulling force acting on the drive cable K in winding engagement with the second reel portion 25 is utilized, upon amplification, for pulling the speed control wire t1 in winding engagement with the first reel portion 24, as shown in Fig. 6.

Thus, the rotational force required to operate the cylindrical operation member 14 for speed change is greatly reduced, consequently providing greatly improved speed change operability.

Further, due to the setting wherein the winding radius D₁ of the first reel portion 24 is smaller than the winding radius D₂ of the second reel portion 25, the winding length of the wire t1 round the first reel portion 19 is smaller than that of of the drive cable K round the drive reel portion 19.

Therefore, the pulling length of the speed control wire t1 can be rendered smaller relative to the rotational amount of the cylindrical operation member 14. In this way, it is possible to enlarge the rotational angle of the cylindrical operation member 14 for each speed stage interval even if the number of speed stages is set large.

As a result, the interval between the respective rotational positions of the cylindrical operation member 14 corresponding to the respective speed stages can be set large even if use is made of a shifting mechanism having a large number of speed stages. Thus, the cylindrical operation member need not be rotationally operated with subtleness for a speed change operation, thereby improving the speed change operability.

Further, it is possible to set a large interval between the respective engaging recesses 37a, 37b--- at the outer circumference of the click ring 33 of the click mechanism 32. Thus, a high precision is not required at the time of manufacturing the click ring, thereby reducing the production cost.

It is moreover possible to improve the speed change operability by adjustably optimizing the rotational amount of the cylindrical operation member 14.

The retainer mechanism 15 is provided at the inner circumference of the cylindrical mounting portion 10 of the brake bracket 8 for holding the cylindrical operation member 14 rotationally stepwise. The retainer mechanism 15 according to the present embodiment comprises a click mechanism 32.

The click mechanism 32 generally includes a click ring 33 as a retainer body arranged axially inwardly from the cylindrical operation member 14 for integral rotation therewith, an engaging member 34 held in elastic abutment with the outer circumference of the click ring 33, and a coil spring 35 for elastically urging the engaging member 34.

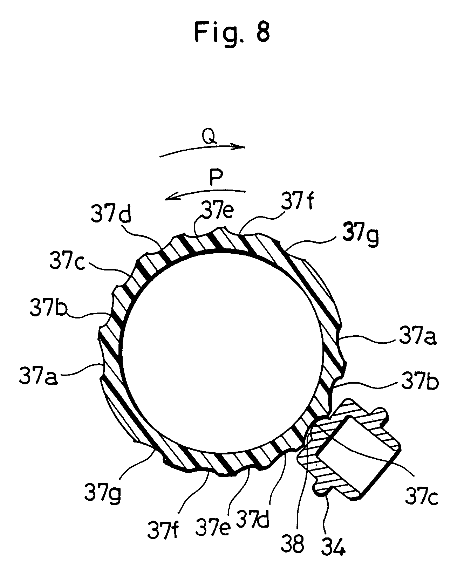

As shown in Figs. 7 and 8, the click ring 33, which is generally cylindrical, is rotatably fitted on the sleeve 17 within the cylindrical mounting portion 10.

The connecting portion 36 provided at the axially outer end of the click ring 33 is connected to the connecting portion 20 at the inner end of the cylindrical operation member 14. As shown in Figs. 7 and 8, the connecting portion 36 is formed with a plurality of engaging teeth 36a for mating with the engaging teeth 20a of the connecting portion 20, so that the click ring 33 is integrally rotatable with the cylindrical operation member 14.

As also shown in Figs. 7 and 8, the outer circumference of the click ring 33 is formed with a plurality of engaging recesses 37a, 37b--- extending axially in parallel to each other. The engaging member 34 has a pawl 38 for successively coming into elastic engagement with the engaging recesses 37a, 37b---, thereby holding the cylindrical operation member 14 stepwise at predetermined rotational positions.

As shown in Fig. 7, the engaging member 34 is received, together with the coil spring 35, in a housing bore 39 which is provided at a base end portion of the brake bracket 8.

The housing bore 39 has an opening 40 communicating with the interior of the cylindrical mounting portion 10 of the brake bracket 8. The pawl 38 of the engaging member 34 projects inward through the opening 40 for abutment with the outer circumference of the click ring 33.

The rotation of the click ring 33 caused by rotationally operating the cylindrical operation member 14 brings the pawl 38 of the engaging member 34 into successive engagement with the engaging recesses 37a, 37b--- of the click ring 33. As a result, the click ring 33 or the cylindrical operation member 14 can be held stepwise at predetermined rotational positions.

With the click mechanism 32 according to the present embodiment, the outer circumference of the cylindrical operation member 14 is not provided with engaging recesses as part of the retainer mechanism. Instead, the click ring 33 externally formed with the engaging recesses 37a, 37b--- is provided separately from the cylindrical operation member 14 and fitted to the inner end of the cylindrical operation member 14 for rotation therewith.

Therefore, even if the cylindrical operation member 14 is distorted by rotationa operation thereof, such a distortion of the cylindrical operation member 14 is not transmitted to the click ring 33. Thus, the engaging recesses 37a, 37b--- of the click ring 33 are prevented from deformation, thereby ensuring a reliable retaining function. As a result, the cylindrical operation member can be reliably held at predetermined pivotal positions to prevent hinderance to a speed change operation.

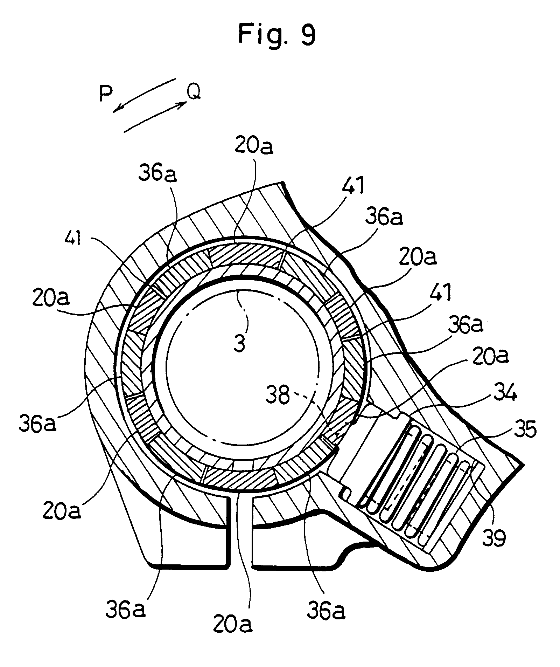

According to the present embodiment, additionally, the engaging teeth 20a of the connecting portion 20 of the cylindrical operation member 14 is made to engage the engaging teeth 36a of the click ring 36 with a predetermined play 41, as shown in Figs. 7 and 9. Therefore, there is allowed a relative play rotation between the cylindrical operation member 14 and gthe click ring 33.

Due to the ability of the cylindrical operation member 14 to make a play rotation, the speed control wire t1 may be pulled by an amount corresponding to the play rotation at the time of performing a speed change, thereby bringing the guide pulley of the shifting mechanism slightly beyond a position immediately under a desired sprocket. Thus, the play rotation provides a so-called overshifting function, consequently improving the speed change operability.

As described above, with the speed change operation assembly 6b according to the present embodiment, the inner wire t1 can be pulled up or paid out by rotationally operating the cylindrical operation member 14, thereby performing a speed change operation.

Further, the click mechanism 32 enables the cylindrical operation member 14 to be clickingly held stepwise at predetermined rotational positions, so that it is possible to perform a speed change operation with reliability and to prevent the inner wire t1 from being erroneously paid out.

In addition, since the cylindrical operation member 14 and the click ring 33 are provided separately from each other, the distortion of the cylindrical operation member 14 attendant with a speed change operation will not be transmitted to the click ring 33. Therefore, a stable speed change operability can be insured for a long time.

The scope of present invention is not limited to the above-described embodiment.

The present invention, which is applied to the right-hand speed change operation assembly 6b for actuating the rear shifting mechanism according to the embodiment, may also be applied to the left-hand speed change operation assembly 6a for actuating the rear shifting mechanism.

According to the embodiment, the speed change operation member is provided by the cylindrical operation member 14 rotatably fitted around a grip portion of the handlebar 3. However, the cylindrical operation member is not limitative, and use may be made for example of a ring-like operation member which is supported to rotate about the axis of the handlebar 3.

Further, the retainer body is not limited in its shape to the one illustrated for the present embodiment but may take other form as long as it can be supported to rotate about the axis of the handlebar.

According to the present invention, the retainer mechanism 15 may also comprise, as an alternative to the click mechanism 32, other engaging mechanism such as ratchet mechanism or frictional holding mechanism, in which case a retainer ring is made to have an outer circumference formed with ratchet teeth or a frictional surface.

According to the present invention, an overshifting function is provided by allowing a relative play rotation between the cylindrical operation member 14 and the click ring 33. However, an arrangement may be adopted to prevent such a play rotation.

## Claims

1. A bicycle speed change operation assembly comprising: a speed change operation member rotatably supported around a handlebar; a retainer mechanism for holding the operation member at predetermined rotational positions; the operation member being rotationally operated for pulling or paying out a control cable which is connected to a shifing mechanism;
wherein the retainer mechanism includes a retainer body rotatably fitted around the handlebar and engaging an end portion of the speed change operation member for integral rotation therewith.

2. The bicycle speed change operation assembly according to claim 1, wherein the speed change operation member and the retainer body engages each other for rotation with a play.

3. The bicycle speed change operation assembly according to claim 1, wherein the retainer mechanism is a click mechanism which comprises an engaging member held in elastic abutment with the outer periphery of the retainer body, and a coil spring for elastically urging the engaging member, the retainer body having a plurality of engaging recesses with which the engaging member successively comes into elastic engagement, thereby holding the speed change operation member stepwise.

4. The bicycle speed change operation assembly according to claim 1, wherein the retainer mechanism is a frictional retainer mechanism which comprises a friction surface provided on the retainer body, and a friction member held into abutment with the friction surface for imparting a predetermined frictional resistance.

5. The bicycle speed change operation assembly according to claim 1, wherein the retainer mechanism is a ratchet mechanism which comprises ratchet teeth formed on the retainer body, and an engaging pawl for engagement with the ratchet teeth.

6. The bicycle speed change operation assembly according to claim 1, wherein the retainer mechanism is arranged in the interior of a brake bracket.
